Europäisches Patentamt

European Patent Office

Office européen des brevets

(19)

(11) Veröffentlichungsnummer : **0 104 553**
**B1**

(12) EUROPÄISCHE PATENTSCHRIFT

(45) Veröffentlichungstag der Patentschrift :
03.12.86

(21) Anmeldenummer : 83109159.0

(22) Anmeldetag : 16.09.83

(51) Int. Cl.⁴ : **B 32 B 27/08**

(54) Verbundwerkstoff.

(30) Priorität : 25.09.82 DE 3235525

(43) Veröffentlichungstag der Anmeldung :
04.04.84 Patentblatt 84/14

(45) Bekanntmachung des Hinweises auf die Patenterteilung : 03.12.86 Patentblatt 86/49

(84) Benannte Vertragsstaaten :
DE FR GB IT

(56) Entgegenhaltungen :
EP-A- 0 010 246
EP-A- 0 037 907
EP-A- 0 074 560
DE-A- 2 650 628
FR-A- 1 522 701

(73) Patentinhaber : BASF Aktiengesellschaft
Carl-Bosch-Strasse 38
D-6700 Ludwigshafen (DE)

(72) Erfinder : Czauderna, Bernhard, Dr.
Kapellenweg 34
D-6945 Hirschberg (DE)
Erfinder : Werner, Frank, Dr.
Waldstrasse 38 B
D-6730 Neustadt (DE)
Erfinder : Vogel, Helmut, Dr.
Heimkaemper-Ort 18
D-4550 Bramsche 6 (DE)
Erfinder : Welz, Martin
Kaiserslauterer Strasse 231
D-6702 Bad Duerkheim (DE)

**Beschreibung**

Die Erfindung betrifft einen Verbundwerkstoff aus einer tragenden Schicht A aus einem mit Füllstoffen versehenen Polyolefin und einer Dekorschicht aus Weichmacher enthaltendem gegebenenfalls geschäumten Polyvinylchlorid, die durch einen mechanische Haftbrücke B und eine Klebstoffschicht C miteinander verbunden sind.

Verbundwerkstoffe aus Füllstoffhaltigem Polyolefin und geschäumtem Weich-PVC wurden in technischem Maßstab hergestellt und finden z. B. als Automobil-Innenteile, als Möbelteile, Gehäuse und Behälter Verwendung.

Polyolefine und Polyvinylchlorid haften normalerweise schlecht aneinander, so daß zum Verbinden der Schichten Haftvermittler angewandt werden müssen. Man hat dazu bisher drei verschiedene Wege eingeschlagen : Man hat als Haftvermittler Schmelzkleber eingesetzt, man hat die Verbindung über Faservliese hergestellt und man hat die gefüllte Polyolefin-Schicht mechanisch aufgerauht und dann mit der Dekorschicht verklebt. Alle drei Methoden sind verhältnismäßig umständlich und teuer, der Verbund ist meist nicht fest genug und die mechanischen und thermischen Eigenschaften der Verbundwerkstoffs können durch eine zusätzliche Haftvermittlerschicht ungünstig beeinflußt werden.

Nach der DE-A-26 50 628 wird eine verformbare Platte aus füllstoffhaltigem Polypropylen durch ein mechanisch verankertes Faservlies und einen Haftvermittler mit einer PVC-Folie verbunden. Über die Art des Haftvermittlers werden keine näheren Angaben gemacht. In der Praxis werden für ähnliche Zwecke Schmelzkleber auf Basis von chlorierten Kohlenwasserstoffen oder lösungsmittelhaltige Reaktivkleber auf Polyurethan- oder Polyepoxidbasis eingesetzt, die aber keine befriedigende Haftung ergeben.

Nach der DE-A-28 19 576 wird eine PVC-Dekorfolie mit einem Polypropylenfaservlies kaschiert und dann mit einem Polypropylen-Flächengebilde unter Anwendung von Druck und Wärme verbunden. Das Kaschieren der Dekorfolie mit dem Faservlies kann u. a. mit einer Kaschierpaste in Plastisolform geschehen. Derartige Kleber auf PVC-Basis sind bekannt, sie bewirken aber auch keinen ausreichenden Verbund, vor allen Dingen nicht bei einer Wärmebelastung.

« In der EP-A-37 907 ist ein Verfahren zum Herstellen von Kunststoff-Formkörpern mit strukturierter Oberfläche beschrieben, bei dem man die Oberfläche eines Formkörpers auf Basis von gefülltem, kautschukmodifiziertem Polypropylen zuerst mit einem Primer und danach mit einem Klebstoff beschichtet und anschließend mit einer rückseits mit Klebstoff beschichteten Kunststoff-Folie nach dem Tiefziehverfahren kaschiert. Als geeignete Klebstoffe werden u. a. Lösungen einer Kombination eines Polyurethan-Elastomeren mit Phenolharzen empfohlen. Dieses Verfahren ist recht umständlich und erfordert die Mitverwendung größerer Mengen an organischen Lösungsmitteln ».

Der Erfindung lag also die Aufgabe zugrunde, einen Verbundwerkstoff zu entwickeln, bei dem eine Schicht A aus einem gefüllten Polypropylen mit sehr guter Haftung mit einer Schicht D aus weichmacherhaltigem PVC verbunden ist.

Diese Aufgabe wird gelöst, wenn als Haftvermittler eine mechanische Haftbrücke B zusammen mit einer Klebstoffschicht C auf Basis eines thermoplastischen Polyurethan-Elastomeren verwendet wird.

Gegenstand der Erfindung ist ein Verbundwerkstoff aus einer Schicht A aus einem mit 10 bis 60 Gew.-% Füllstoffen gefüllten Polyolefin und einer Schicht D aus einem 15 bis 40 Gew.-% Weichmacher enthaltenden, gegebenenfalls geschäumten Polyvinylchlorid, welche durch eine mechanische Haftbrücke B und eine Klebstoffschicht C miteinander verbunden sind, wobei der Klebstoff ein thermoplastisches Polyurethan-Elastomeres ist.

Die tragende Schicht A besteht aus einem gefüllten Polyolefin und kann 0,5 bis 8, vorzugsweise 1 bis 4 mm dick sein. Unter Polyolefinen werden dabei die Homo- und Copolymerisate des Ethylens und des Propylens mit copolymerisierbaren olefinisch ungesättigten Verbindungen verstanden. Bevorzugte Polyolefine sind Polyethylen der Dichte 0,890 bis 0,965 g/ml (nach DIN 53 479) und des Schmelzindex von 0,1 bis 20 g/10 min (nach ASTM D 1238-65 T bei einer Temperatur von 190 °C und einem Auflagegewicht von 2,16 kg) sowie Polypropylen der Dichte 0,80 bis 0,90 g/ml und des Schmelzindex von 0,1 bis 20 g/10 min (nach ASTM-D 1238-65 T bei 230 °C und 2,16 kg Belastung).

Die Polyolefine können zur Erhöhung ihrer Schlagzähigkeitseigenschaften gegebenenfalls noch 1 bis 20 Gew.-% an üblich bekannten synthetischen Kautschuken oder Blockcopolymerisaten aus Styrol und Dienen enthalten. Als besonders geeignetes Polyolefin wird isotaktisches Polypropylen verwendet. Dieses enthält 3 bis 10 Gew.-% eines Polypropylens, das in siedenden und anschließend auf Zimmertemperatur wieder abgekühlten Xylol, bei einem Gewichtsverhältnis von Polypropylen zu Xylol wie 5 : 95, löslich ist.

Die Polyolefine sind mit 10 bis 60, bevorzugt 20 bis 50 Gew.-%, bezogen auf das Gewicht des gefüllten Polyolefins, eines üblichen festen und inerten Füllstoffes gefüllt. Für die Verwendung der Polyolefinschicht geeignete Füllstoffe sind beispielsweise Glasfasern, Glasmatten, Glaskugeln, Talkum, Kreide, Glimmer sowie vorzugsweise feinteiliges Holz. Als Holzteilchen kommen alle marktgängigen Typen in einer mittleren Teilchengröße von 30 bis 3 000 μm, vorzugsweise von 50 bis 500 μm in Betracht. Die Holzmehle können sowohl in Pulverform als auch kompaktiert eingesetzt sein. Zusätzlich zu den obigen Füllstoffen können die Polyolefinmassen noch einschlägig bekannte Flammschutzmittel, Mittel zur Verbesserung der Schlagfestigkeit wie Polyethylen niederer Dichte, Stabilisatoren oder Polymerisat-Abfallstoffe enthalten.

Die Dekorschicht D besteht aus Weichmacher enthaltendem Polyvinylchlorid, das gegebenenfalls durch Zusatz von Styrolcopolymeren, wie Styrol-Acrylnitril-Copolymerisat, Acrylnitril-Butadien-Styrol-Copolymerisat, Acrylnitril-Styrol-Acrylester-Copolymerisat oder Pfropfkautschuken zur Schlagzähmodifizierung oder durch Zusatz von gesättigten Polyestern zur Verbesserung der Verarbeitbarkeit modifiziert sein kann. Vorzugsweise wird eine weichgemachte PVC-Folie verwendet, die geschäumt sein kann, um einen weicheren Griff und Polstereffekt zu erzeugen. Solche Folien sind in vielen Farben und Mustern auf dem Markt erhältlich. Die Dicke der Schicht D kann bei kompakten Aufbau zwischen 0,1 und 3 mm, bei geschäumten Folien zwischen 0,5 und 5 mm liegen.

Unter Polyvinylchlorid wird das Polymerisationsprodukt des Vinylchlorids verstanden, das einen Chlorgehalt von 56 bis 57 Gew.-% und einen Erweichungspunkt von 75 bis 80 °C aufweist. Der K-Wert liegt vorzugsweise bei 70 bis 90 (gemessen nach DIN 53 726). Ein geschäumtes Polyvinylchlorid ist ein künstlich hergestellter leichter Schaumstoff mit zelliger Struktur. Für die erfindungsgemäßen Verbundstoffe sind PVC-Weichschäume mit Dichten von 0,6 bis 1,3 g/ml besonders geeignet. Die Dekorschicht enthält übliche Weichmacher in Mengen von 15 bis 40, bevorzugt 20 bis 35 Gew.%, bezogen auf das Weich-PVC. Geeignete Weichmacher sind beispielsweise Trikesylphosphat, Phthalsäureester oder Ester aliphatischer Dicarbonsäuren. Das Weich-PVC kann außerdem noch übliche Stabilisatoren und Pigmente enthalten.

Die mechanische Haftbrücke B besteht vorzugsweise aus einem Faservlies oder aus Holzspänen Als Faservliese kommen Spinn- oder Krempelvliese aus Kunstfasern in Frage, z. B. aus linearen Polyestern, wie Polyethylenterephthalat, aus Polyolefinen, wie Polyethylen und Polypropylen, ferner aus Polyvinylchlorid, Polyacrylnitril, Polyamid oder Mischungen der angeführten Fasern. Die Vliese können thermisch oder mechanisch oder mit einem Bindemittel verfestigt sein. Ihr Flächengewicht kann zwischen 30 und 200 $g \cdot m^{-2}$ liegen.

Die Holzspäne haben eine mittlere Teilchengröße (gemessen durch Siebanalyse) von 100 bis 3 000 µm, vorzugsweise von 200 bis 1 000 µm, und ein Länge : Dicke-Verhältnis von 1 : 1 bis 20 : 1. Sie werden bevorzugt in einer Schichtdicke von 50 bis 250 g pro 1 m² aufgebracht.

Der Klebstoff C ist erfindungsgemäß ein thermoplastisches Polyurethan-Elastomeres, vorzugsweise mit einem Schmelzbereich von 110 bis 250 °C, insbesondere von 180 bis 210 °C. Es unterscheidet sich grundlegend von den üblichen Polyurethan-Reaktivklebern, die aus zwei Komponenten, einem Polyisocyanat und einem Polyol bestehen, welche — meist in Gegenwart eines Katalysators — bei Raumtemperatur bis maximal 80 °C miteinander reagieren.

Das thermoplastische Polyurethan-Elastomere ist ein Einkomponenten-Kleber, der als solcher eingesetzt wird. Er wird gewöhnlich hergestellt durch Umsetzung von

a) organischen Diisocyanaten mit

b) Polyhydroxyverbindungen mit Molekulargewichten von 500 bis 8 000 und

c) Kettenverlängerungsmitteln mit Molekulargewichten von 60 bis 400 in Gegenwart von

d) Katalysatoren und gegebenenfalls

e) Hilfsmitteln und/oder

f) Zusatzstoffen.

a) Als organische Diisocyanate (a) kommen beispielsweise aliphatische, cycloaliphatische und vorzugsweise aromatische Diisocyanate in Betracht. Im einzelnen seien beispielhaft genannt : aliphatische Diisocyanate, wie Hexamethylen-diisocyanat, cycloaliphatische Diisocyanate, wie Isophoron-diisocyanat, 1,4-Cyclohexan-diisocyanat, 1-Methyl-2,4- und -2,6-cyclohexan-diisocyanat sowie die entsprechenden Isomerengemische, 4,4'-, 2,4' und 2,2'-Dicyclohexylmethan-diisocyanat sowie die entsprechenden Isomerengemische und vorzugsweise aromatische Diisocyanate, wie 2,4-Toluylen-diisocyanat, Gemische aus 2,4- und 2,6-Toluylen-diisocyanat, 4,4'-, 2,4'- und 2,2'-Diphenylmethan-diisocyanat, Gemische aus 2,4'- und 4,4'-Diphenylmethan-diisocyanat, urethanmodifizierte flüssige 4,4'- und/oder 2,4'-Diphenylmethan-diisocyanate und 1,5-Naphthylen-diisocyanat. Vorzugsweise verwendet werden Hexamethylen-diisocyanat, Isophoron-diisocyanat, Diphenylmethan-diisocyanat-Isomerengemische mit einem 4,4'-Diphenylmethan-diisocyanatgehalt von größer als 96 Gew.% und insbesondere 4,4'-Diphenylmethan-diisocyanat und 1,5-Naphthylen-diisocyanat.

b) Als höhermolekulare Polyhydroxylverbindungen (b) mit Molekulargewichten von 500 bis 8 000 eignen sich vorzugsweise Polyesterole. In Betracht kommen jedoch auch andere hydroxylgruppenhaltige Polymere, beispielsweise Polyacetale, wie Polyoxymethylene und vor allem wasserunlösliche Formale, z. B. Polybutandiolformal und Polyhexandiolformal, und Polycarbonate, insbesondere solche aus Diphenylcarbonat und Hexandiol-1,6, hergestellt durch Umesterung. Die Polyhydroxylverbindungen müssen zumindest überwiegend linear, d. h. im Sinne der Isocyanatreaktion difunktionell aufgebaut sein. Die genannten Polyhydroxylverbindungen können als Einzelkomponenten oder in Form von Mischungen zur Anwendung kommen.

Geeignete Polyetherole können dadurch hergestellt werden, daß man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z. B. genannt : Ethylenoxid, 1,2-Propylenoxid, Epichlorhydrin und 1,2- und 2,3-Butylenoxid. Vorzugsweise Anwendung finden Ethylenoxid und Mischungen aus Propylenoxid und Ethylenoxid. Die Alkyleno-

xide können einzeln, alternierend nacheinander oder als Mischungen verwendet werden. Als Startermoleküle kommen beispielsweise in Betrach : Wasser, Aminoalkohole, wie N-Alkyldiethanol-amine, beispielsweise N-Methyl-diethanolamin und Diole, wie Ethylenglykol, 1,3-Propylenglykol, Butandiol-1,4 und Hexandiol-1,6. Gegebenenfalls können auch Mischungen von Startermolekülen eingesetzt werden. Geeignete Polyetherole sind ferner die hydroxylgruppenhaltigen Polymerisationsprodukte des Tetrahydrofurans.

Vorzugsweise verwendet werden hydroxylgruppenhaltiges Polytetrahydrofuran und Polyetherole aus Propylenoxid und Ethylenoxid, in denen mehr als 50 %, vorzugsweise 60 bis 80 % der OH-Gruppen primäre Hydroxylgruppen sind und bei denen zumindest ein Teil des Ethylenoxids als endständiger Block angeordnet ist.

Solche Polyetherole können erhalten werden, indem man z. B. an das Startermolekül zunächst das Propylenoxid und daran anschließend das Ethylenoxid polymerisiert oder zunächst das gesamte Propylenoxid im Gemisch mit einem Teil des Ethylenoxids copolymerisiert und den Rest des Ethylenoxids anschließend anpolymerisiert oder schrittweise zunächst einen Teil des Ethylenoxids, dann das gesamte Propylenoxid und dann den Rest des Ethylenoxids an das Startermolekül anpolymerisiert.

Die im wesentlichen linearen Polyetherole besitzen Molekulargewichte von 500 bis 8 000, vorzugsweise 600 bis 6 000 und insbesondere 800 bis 3 500. Sie können sowohl einzeln als auch in Form von Mischungen untereinander zur Anwendung kommen.

Geeignete Polyesterole können beispielsweise aus Dicarbonsäuren mit 2 bis 12 Kohlenstoffatomen und mehrwertigen Alkoholen hergestellt werden. Als Dicarbonsäuren kommen beispielsweise in Betracht : aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z. B. in Form einer Bernstein-, Glutar- und Adipinsäuremischung, verwendet werden. Zur Herstellung der Polyesterole kann es gegebenenfalls vorteilhaft sein, anstelle der Carbonsäuren die entsprechenden Carbonsäurederivate, wie Carbonsäureester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 16 Kohlenstoffatomen, wie Ethylenglykol, Diethylenglykol, Butandiol-1,4, Pentandiol-1,5, Hexandiol-1,6, Decandiol-1,10, 2,2-Dimethylpropandiol-1,3, Propandiol-1,3 und Dipropylenglykol. Je nach den gewünschten Eigenschaften können die mehrwertigen Alkohole allein oder gegebenenfalls in Mischungen untereinander verwendet werden.

Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise ω-Hydroxycapronsäure und vorzugsweise Polymerisationsprodukte von Lactonen, beispielsweise gegebenenfalls substituierten ω-Caprolactonen.

Als Polyesterole vorzugsweise verwendet werden Ethandiol-polyadipate, 1,4-Butandiol-polyadipate, Ethandiol-butandiol-polyadipate, 1,6-Hexandiol-neopentylglykol-polyadipate, 1,6-Hexandiol-1,4-butandiol-polyadipate und Polycaprolactone.

Die Polyesterole besitzen Molekulargewichte von 500 bis 6 000, vorzugsweise von 800 bis 3 500.

c) Als Kettenverlängerungsmittel (c) mit Molekulargewichten von 60 bis 400, vorzugsweise 60 bis 300, kommen vorzugsweise aliphatische Diole mit 2 bis 12 Kohlenstoffatomen, vorzugsweise mit 2, 4 oder 6 Kohlenstoffatomen, wie z. B. Ethandiol, Hexandiol-1,6 Diethylenglykol, Dipropylenglykol und insbesondere Butandiol-1,4 in Betracht. Geeignet sind jedoch auch Diester der Terephthalsäure mit Glykolen mit 2 bis 4 Kohlenstoffatomen, wie z. B. Terephthalsäure-bis-ethylenglykol oder -butandiol-1,4, Hydroxyalkylenether des Hydrochinons, wie z. B. 1,4-Di-(β-hydroxyethyl)-hydrochinon, (cyclo)aliphatische Diamine, wie z. B. Isophoron-diamin, Ethylendiamin, 1,2-, 1,3-Propylen-diamin, N-Methyl-propylendiamin-1,3, N,N'-Dimethyl-ethylen-diamin und aromatische Diamine, wie z. B. 2,4- und 2,6-Toluylen-diamin, 3,5-Diethyl-2,4- und -2,6-toluylendiamin und primäre ortho-di-, tri- und/oder tetraalkylsubstituierte 4,4'-Diamino-diphenylmethane.

Zur Einstellung von Härte und Schmelzpunkt der TPU können die Aufbaukomponenten (b) und (c) in relativ breiten molaren Verhältnissen variiert werden. Bewährt haben sich molare Verhältnisse von Polyhydroxylverbindungen (b) zu Kettenverlängerungsmitteln (c) von 1 : 1 bis 1 : 12, insbesondere von 1 : 1,8 bis 1 : 4,4, wobei die Härte und der Schmelzpunkt der TPU mit zunehmendem Gehalt an Diolen ansteigt.

Zur Herstellung der TPU werden die Aufbaukomponenten (a), (b) und (c) in Gegenwart von Katalysatoren (d) und gegebenenfalls Hilfsmitteln (e) und/oder Zusatzstoffen (f) in solchen Mengen zur Reaktion gebracht, daß das Äquivalenzverhältnis von NCO-Gruppen der Diisocyanate zur Summe der Hydroxylgruppen oder Hydroxyl- und Aminogruppen der Komponenten (b) und (c) 1 : 0,85 bis 1,20, vorzugsweise 1 : 0,95 bis 1 : 1,05 und insbesondere ungefähr 1 : 1,02 beträgt.

d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z. B. Triethylamin, Dimethylcyclohexylamin, N-Methylmorpholin, N,N'-Dimethyl-piperazin, Diazabicyclo-(2,2,2)-octan und ähnliche sowie insbesonders organische Metallverbindungen wie Titansäureester, Eisenverbindungen, Zinnverbindungen, z. B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,001 bis 0,1 Teilen pro 100 Teilen Polyhydroxylverbindung eingesetzt.

Neben Katalysatoren können den Aufbaukomponenten auch Hilfsmittel (e) und/oder Zusatzstoffe (f) einverleibt werden. Genannt seien beispielsweise Gleitmittel, Inhibitoren, Stabilisatoren gegen Hydrolyse, Licht, Hitze oder Verfärbung, Flammschutzmittel, Farbstoffe, Pigmente, anorganische und/oder organische Füllstoffe und Verstärkungsmittel.

Nähere Angaben über die obengenannten Hilfsmittel und Zusatzstoffe sind der Fachliteratur, beispielsweise der Monographie von J. H. Saunders und K. C. Frisch « High Polymers », Band XVI, Polyurethane, Teil 1 und 2, Verlag Interscience Publishers 1962 bzw. 1964 oder der DE-A-29 01 774 zu entnehmen.

Bei der Herstellung der erfindungsgemäßen Verbundwerkstoffe wird die mechanische Haftbrücke B in die oberflächlich auf Temperaturen oberhalb des Erweichungsbereichs des Polyolefins erwärmte Schicht A eingepreßt, damit sie sich dort fest mechanisch verankert. Im Falle der Verwendung von holzmehlgefülltem Polypropylen wird die Schicht A auf Temperaturen zwischen 160 und 230 °C erwärmt. Es kann günstig sein, die mechanische Haftbrücke B auf die Schicht A kurz nach deren Herstellung durch Breitschlitzextrusion aufzubringen. Holzspäne werden aufgestreut, Faservliese werden aufgelegt und anschließend, z. B. mit Walzen, eingepreßt. Es ist grundsätzlich auch möglich, die mechanische Haftbrücke auf die Schicht A in kaltem Zustand aufzubringen, dann, z. B. mit einem IR-Strahler aufzuheizen und einzupressen.

Der Klebstoff C wird bevorzugt in Form eines Pulvers oder einer Folie eingesetzt, über die Schmelztemperatur erwärmt und mit der Schicht D verpreßt. Diese Arbeitsweise hat den Vorteil, daß nur verhältnismäßig wenig Klebstoff verwendet werden muß. Die Foliendicke liegt dabei zwischen 20 und 500 μm, bevorzugt zwischen 60 und 120 μm. Beim Pulverauftrag genügt ein Flächengewicht von 10 bis 100 g/m², bevorzugt 20 bis 50 g/m². Grundsätzlich ist es auch möglich, den Klebstoff aus Lösung aufzubringen, diese Arbeitsweise ist aber umständlicher, da das Lösungsmittel anschließend wieder verdampft werden muß.

Eine andere Ausführungsform besteht darin, daß man ein Faservlies als mechanische Haftbrücke B mit dem Klebstoff C zusammenführt, den Klebstoff aufschmilzt und dadurch auf den Faservlies fixiert, den Verbund Faservlies/Klebstoff auf die oberflächlich erwärmte Schicht A auflegt und zusammen mit der Schicht D verpreßt.

Bei einer weiteren Ausführungsform wird zunächst der Klebstoff C durch Aufschmelzen auf der Schicht D fixiert. Dies kann entweder dadurch geschehen, daß man ihn aufextrudiert oder als Pulver aufstreut bzw. als Folie auflegt und dann aufschmelzt. Der Verbund PVC-Schicht/Klebstoff wird dann mit einem Faservlies als Schicht B und der oberflächlich erwärmten Schicht A zusammengeführt und verpreßt, oder er wird auf die erwärmte Schicht A, in die die mechanische Haftbrücke B in Form eines Faservlieses oder von Holzspänen eingepreßt worden war, aufgelegt und verpreßt.

Schließlich ist es auch möglich, auf die Schicht D den Klebstoff C aufzuextrudieren oder diesen als Folie oder Pulver mit der Schicht D zusammenzuführen und aufzuschmelzen, die mechanische Haftbrücke B auf die geschmolzene Schicht C aufzubringen und mit der oberflächlich erwärmten Schicht A zusammenzuführen und zu verpressen.

Das Verpressen der Schichten A und D wird vorzugsweise bei Temperaturen zwischen 100 und 250 °C und Drücken zwischen 5 und 100 bar vorgenommen. Dies kann kontinuierlich, z. B. in beheizten Walzen oder Bandpressen, oder bei gleichzeitiger Formgebung taktweise in hydraulich oder mechanisch betätigten Formpressen geschehen.

Durch die erfindungsgemäßen Haftvermitler B und C erhält man eine hervorragende Haftverbindung der Schichten A und D, sowohl bei Raumtemperatur als auch bei 90 °C, die auch nach längerer Lagerung des Verbundwerkstoffs erhalten bleibt. Ein weiterer Vorteil ist in der einfachen Verarbeitung zu sehen ; im Falle der Verwendung von Faservliesen als mechanische Haftbrücke erhält man eine zusätzliche Verstärkung des Verbundwerkstoffs.

Die erfindungsgemäßen Verbundwerkstoffe können nach verschieden Verfahren, wie Vakuum- oder Druckluftformen, Abkanten, Biegen, Pressen zu Formkörpern verarbeitet werden.

Die in den Beispielen genannten Teile und Prozente beziehen sich auf das Gewicht.

Beispiel 1

Als Schicht A wurde eine 200 × 200 × 2,8 mm große Platte aus 62 % isotaktischem Polypropylen (Dichte 0,89 g/ml ; Meltindex 13 g/10 min, nach ASTM 1238-65 T bei 230 °C und 2,16 kg Belastung) und 38 % Holzmehl mit einer mittleren Teilchengröße von ca. 80 μm, als Schicht B ein durch Nadeln mechanisch verfestigtes Spinnvlies aus Polyethylenterephthalatfasern (10 bis 12 dtex) mit einem Flächengewicht von 110 g·m⁻² verwendet. Die Platte wurde auf 200 °C aufgewärmt und bei einem Druck von ca. 10 N·cm⁻² etwa 20 s lang mit dem Spinnvlies verpreßt. Nach dem Abkühlen der Platte werden 30 g/m² eines pulverförmigen Polyurethan-Elastomeren, mit einem Schmelzbereich von 118 bis 210 °C, bestehend aus einem Butandiol-Polyadipat, Butandiol-1,4 und 4,4'-Diphenylmethandiisocyanat aufgestreut. Auf diesen, wiederholt auf 200 °C erwärmten Verbund wird dann eine kalte, nicht geschäumte Weich-PVC-Folie von 0,5 mm Dicke aus 65 % PVC (mit einem K-Wert nach Fikentscher von 68) und 35 % Dioctylphthalat aufgelegt und ein Probekörper bei 300 N/cm² gepreßt. Weder in den Vertiefungen und Kanten noch auf den Flächen des erfindungsgemäßen Verbundenwerkstoffs wurden nach dem Verpressen und nach einer Wärmelagerung bei 90 °C Ablösungen festgestellt.

**Beispiel 2**

Es wurde gearbeitet wie in Beispiel 1, jedoch wurden auf die Schicht A statt eines Spinnvlieses als Schicht B Buchenholzspäne in einer Menge von 125 g·m⁻² über ein Sieb mit der Maschenweite 300 μm gleichmäßig aufgestreut. Die Holzspäne hatten eine mittlere Teilchengröße (nach Siebanalyse von ca. 400 μm und ein mittleres Länge- : Dicke-Verhältnis von etwa 5). Auch bei diesem Verbund wurden nach dem Verpressen und der Wärmelagerung keine Ablösung festgestellt.

**Beispiel 3**

Es wurde wie in Beispiel 1 gearbeitet, jedoch wurde anstelle des genadelten Vlieses ein thermisch mit Hilfe von Polyesterfasern verfestigtes Polyestervlies verwendet.

**Beispiel 4**

Es wurde wie in Beispiel 3 gearbeitet, jedoch wurde anstelle einer kalten PVC-Folie eine auf 110 °C vorgewärmte, 30 % ABS enthaltende PVC-Folie aufgelegt.

**Beispiel 5**

Es wurde wie in Beispiel 4 gearbeitet, jedoch wurde ein Polyurethan-Elastomeres mit einem Schmelzbereich von 150 bis 180 °C, bestehend aus Butandiol-Ethylenglykolpolyadipat, Butandiol-1,4 und 4,4'-Diphenylmethanenisocyanat eingesetzt.

**Patentansprüche**

1. Verbundwerkstoff aus einer Schicht A aus einem mit 10 bis 60 Gew.-% Füllstoffen gefüllten Polyolefin und einer Schicht D aus einem 15 bis 40 Gew.-% Weichmacher enthaltenden, gegebenenfalls geschäumten Polyvinylchlorid, welche durch eine mechanische Haftbrücke B und eine Klebstoffschicht C miteinander verbunden sind, dadurch gekennzeichnet, daß der Klebstoff ein thermoplastisches Polyurethan-Elastomer ist.

2. Verbundwerkstoff nach Anspruch 1, dadurch gekennzeichnet, daß das Polyurethanelastomer einen Schmelzbereich von 110 bis 250 °C, vorzugsweise von 180 bis 210 °C hat.

3. Verbundwerkstoff nach Anspruch 1, dadurch gekennzeichnet, daß die mechanische Haftbrücke B aus einem Faservlies oder aus Holzspänen besteht.

4. Verbundwerkstoff nach Anspruch 2, dadurch gekennzeichnet, daß die mechanische Haftbrücke ein Spinn- oder Krempelvlies aus Kunstfasern, vorzugsweise Polyesterfasern, ist.

5. Verbundwerkstoff nach Anspruch 2, dadurch gekennzeichnet, daß die mechanische Haftbrücke aus Hartholzspänen mit einer mittleren Teilchengröße von 100 bis 3 000 μm und einem Länge : Dicke-Verhältnis von 1 : 1 bis 20 : 1 besteht.

6. Verfahren zur Herstellung des Verbundwerkstoffes nach Anspruch 1, bei dem man die mechanische Haftbrücke B in die oberflächlich auf Temperaturen oberhalb des Erweichungsbereichs des Polyolefins erwärmte Schicht A einpreßt, darauf den Klebstoff C in Form eines Pulvers oder einer Folie aufbringt, dieses über die Schmelztemperatur erwärmt und schließlich mit der Schicht D verpreßt, dadurch gekennzeichnet, daß der Klebstoff ein thermoplastisches Polyurethan-Elastomer ist.

7. Verfahren zur Herstellung des Verbundwerkstoffes nach Anspruch 1, bei dem man ein Faservlies als mechanische Haftbrücke B mit dem Klebstoff C zusammenführt, den Klebstoff aufschmilzt und dadurch auf dem Faservlies fixiert, den Verbund Faservlies/Klebstoff auf die oberflächlich erwärmte Schicht A auflegt und zusammen mit der Schicht D verpreßt, dadurch gekennzeichnet, daß der Klebstoff ein thermoplastisches Polyurethan-Elastomer ist.

8. Verfahren zur Herstellung des Verbundwerkstoffes nach Anspruch 1, bei dem man den Klebstoff C durch Aufschmelzen auf der Schicht D fixiert, mit einem Faservlies als mechanische Haftbrücke B und der oberflächlich erwärmten Schicht A zusammenführt und verpreßt, dadurch gekennzeichnet, daß der Klebstoff ein thermoplastisches Polyurethan-Elastomer ist.

9. Verfahren zur Herstellung des Verbundwerkstoffes nach Anspruch 1, bei dem man die Schicht D mit dem Klebstoff C zusammenführt, diesen aufschmilzt, die mechanische Haftbrücke B darauf aufbringt und mit der oberflächlich erwärmten Schicht A zusammenführt und verpreßt, dadurch gekennzeichnet, daß der Klebstoff ein thermoplastisches Polyurethan-Elastomer ist.

**Claims**

1. A laminate consisting of a layer A of a polyolefin containing 10 to 60 % by weight of fillers and a layer D of an expanded or unexpanded polyvinyl chloride containing from 15 to 40 % by weight of a plasticizer, which layers are connected together by an adhesion-promoting layer B and a layer of adhesive C, characterized in that the adhesive is a thermoplastic polyurethane elastomer.

2. A laminate as claimed in claim 1, characterized in that the polyurethane elastomer has a melting-point range of from 110 to 250 °C, preferably from 180 to 210 °C.

3. A laminate as claimed in claim 1, characterized in that the adhesion-promoting layer B consists of a nonwoven fabric or of wood chips.

4. A laminate as claimed in claim 2, characterized in that the adhesion-promoting layer consists of a spunbonded or carded nonwoven fabric made of man-made fibres, preferably polyester fibres.

5. A laminate as claimed in claim 2, characterized in that the adhesion-promoting layer consists of hardwood chips having a mean particle size of from 100 to 3 000 μm and a length/width ratio of from 1 : 1 to 20 : 1.

6. A process for the production of a laminate as claimed in claim 1, in which the adhesion-promoting layer B is pressed into the layer A heated superficially to a temperature above the softening-point range of the polyolefin, the adhesive C in the form of a powder or film is applied thereto and heated to above its melting point, and finally the assembly is laminated to layer D with the application of pressure, characterized in that the adhesive is a thermoplastic polyurethane elastomer.

7. A process for the production of a laminate as claimed in claim 1, in which a nonwoven fabric as adhesion-promoting layer B is combined with the adhesive C, the adhesive is fused and thus fixed to the nonwoven fabric, the combination of nonwoven fabric and adhesive is laid on top of the superficially heated layer A, and the assembly is laminated to layer D with the application of pressure, characterized in that the adhesive is a thermoplastic polyurethane elastomer.

8. A process for the production of a laminate as claimed in claim 1, in which the adhesive C is fixed to the layer D by fusion, the resulting combination is combined with a nonwoven fabric, as adhesion-promoting layer B, and the superficially heated layer A, and the assembly is compressed, characterized in that the adhesive is a thermoplastic polyurethane elastomer.

9. A process for the production of a laminate as claimed in claim 1, in which the layer D is combined with the adhesive C, the latter is fixed to said layer by fusion, the adhesion-promoting layer B is applied to the resulting combination and combined with the superficially heated layer A, and the assembly is compressed, characterized in that the adhesive is a thermoplastic polyurethane elastomer.

**Revendications**

1. Matériau composite, constitué d'une couche A en une polyoléfine chargée avec 10 à 60 % en poids de matières de charge et d'une couche D en chlorure de polyvinyle éventuellement expansé et contenant 15 à 40 % en poids d'un plastifiant, les deux couches étant réunies par un pont de liaison mécanique B et par une couche de colle C, caractérisé en ce que la colle est un élastomère de polyuréthane thermoplastique.

2. Matériau composite suivant la revendication 1, caractérisé en ce que l'élastomère de polyuréthane présente un domaine de fusion de 110 à 250 °C, de préférence de 180 à 210 °C.

3. Matériau composite suivant la revendication 1, caractérisé en ce que le pont de liaison mécanique B est constitué par une nappe de fibres ou par des copeaux de bois.

4. Matériau composite suivant la revendication 2, caractérisé en ce que le pont de liaison mécanique est une nappe de fibres synthétiques filées ou cardées, de préférence des fibres de polyester.

5. Matériau composite suivant la revendication 2, caractérisé en ce que le pont de liaison mécanique est constitué par des copeaux de bois dur présentant une dimension moyenne des particules de 100 à 3 000 μm et un rapport longueur : épaisseur de 1 : 1 à 20 : 1.

6. Procédé de fabrication du matériau composite suivant la revendication 1, suivant lequel on applique sous pression le pont de liaison mécanique B dans la couche A chauffée en surface à des températures supérieures au domaine de ramollissement de la polyoléfine, on étale sur cet ensemble la colle C sous forme d'une poudre ou d'une feuille, on chauffe cette colle au-dessus de son point de fusion et finalement on applique la couche D sur la colle par compression, caractérisé en ce que la colle est un élastomère de polyuréthane thermoplastique.

7. Procédé de fabrication du matériau composite suivant la revendication 1, suivant lequel on réunit une nappe de fibres faisant office de pont de liaison mécanique B et la colle C, on fait fondre la colle et de ce fait on la fixe sur la nappe de fibres, on place le matériau composite nappe de fibres/colle sur la couche A chauffée en surface et on réunit cet ensemble avec la couche D par compression, caractérisé en ce que la colle est un élastomère de polyuréthane thermoplastique.

8. Procédé de fabrication du matériau composite suivant la revendication 1, suivant lequel on fixe la colle C par fusion sur la couche D, et on réunit cet ensemble par compression avec une nappe de fibres faisant office de pont de liaison mécanique B et avec la couche A chauffée en surface, caractérisé en ce que la colle est un élastomère de polyuréthane thermoplastique.

9. Procédé de fabrication du matériau composite suivant la revendication 1, suivant lequel on réunit la couche D et la colle C, on fait fondre la colle, on applique sur la couche D encollée le pont de liaison mécanique B et on réunit cet ensemble par compression avec la couche A chauffée en surface, caractérisé en ce que la colle est un élastomère de polyuréthane thermoplastique.